(19)

**Europäisches Patentamt**
**European Patent Office**
**Office européen des brevets**

(11) **EP 3 032 183 B1**

(12) **EUROPEAN PATENT SPECIFICATION**

(45) Date of publication and mention
of the grant of the patent:
**06.06.2018 Bulletin 2018/23**

(21) Application number: **15199943.0**

(22) Date of filing: **14.12.2015**

(51) Int Cl.:
*F24F 5/00* (2006.01)     *F24F 12/00* (2006.01)
*F28D 20/02* (2006.01)     *F28D 21/00* (2006.01)
*F24F 11/00* (2018.01)     *A01K 1/00* (2006.01)

(54) **VENTILATION SYSTEM COMPRISING PCM**

LÜFTUNGSSYSTEM PCM UMFASSEND

SYSTÈME DE VENTILATION COMPRENANT PCM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2014 NL 2013976**

(43) Date of publication of application:
**15.06.2016 Bulletin 2016/24**

(73) Proprietor: **Autarkis B.V.**
**7451 PK Holten (NL)**

(72) Inventor: **Schmitz, Antonius Henricus Hubertus**
**6061 CT Posterholt (NL)**

(74) Representative: **van Essen, Peter Augustinus et al**
**Van Essen Patent B.V.**
**Agro Business Park 50**
**6708 PW Wageningen (NL)**

(56) References cited:
**EP-A1- 1 908 809      WO-A1-2009/101398
WO-A1-2013/021019      WO-A2-03/102484**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Background of the invention

The invention relates to a ventilation assembly comprising PCM, a method for ventilating a building or a room in a building, a heat exchanger for a ventilation assembly, and a control device for a ventilation assembly.

A ventilation assembly may have been installed in a building or a part thereof, for the supply and/or discharge of air. Such a ventilation assembly may be part of a climate system for controlling an indoor climate in a building, but in some cases also form the climate system.

WO2003/102484 relates to conditioning air in the room of a building in terms of heat and/or cold and optionally humidity.

According to the abstract supplied air flows into the room of the building and the extracted air is conducted out of said room, whereby a sensitive recuperative heat exchange is carried out between the supplied air and the extracted air, preferably prior to the influx of supplied air and after the discharge of extracted air from the room of the building.

According to the abstract it is furthermore advantageous if a separate supplied-air conduction device, which forms a supplied air flow, is provided and the temperature of the ambient air is modified by latent heat accumulator bodies that have been arranged in the room of the building.

Said latent heat accumulator bodies can be located in particular in the vicinity of the ceiling.

Thermal buffer elements that operate by means of latent heat can furthermore be provided.

According to the abstract, WO2009/101398 describes a transportable PCM (phase change material) module comprising a number of PCM packs; a housing for thermally insulting [... insulating] said number of PCM packs from a module's surrounding medium; spaces separating said packs and forming one or more channels for the flow of a fluid; said housing incorporating a fluid inlet and a fluid outlet; whereby, in use, fluid flows through said channels from said inlet to said outlet. A PCM (phase change material) pack comprises a laminate of a first conducting panel and a second conducting panel enclosing a portion consisting primarily of PCM; wherein said portion of PCM incorporates thermal conductors.

### Summary of the invention

It is an object of the invention to provide a ventilation assembly with which optimal use can be made of conditions outside of a building and of so-called phase change material, also called PCM, for ventilation of a building or a room in a building.

For that purpose the invention provides a ventilation assembly according to claim 1. The invention further provides a method according to claim 10.

By using such an assembly or method it is possible to ventilate, cool, and heat and provide heat recovery.

In one embodiment the second air supply flow rate is at least twice as large as the first air supply flow rate. It has turned out that at such a difference a good heat recovery effect can be achieved in combination with a setting for heating or cooling by means of energy storage in the PCM material.

In one embodiment, in the first setting, the air displacement device has been set for a balanced ventilation.

In one embodiment, in the second setting, the air displacement device has been set for a balanced ventilation.

In combination with balanced or substantially balanced ventilation, optimisation between heat recovery and use of PCM material is possible.

In one embodiment, the air displacement device comprises an inbound air displacement device for displacing inbound ventilating air and an outbound air displacement device for displacing outbound ventilating air. In that way the operation between various settings can be set and optimal use can be made of the PCM material at a reduced use of energy.

In one embodiment the control device is functionally coupled to the air displacement device for influencing the air flow rates.

In one embodiment the ventilation assembly has furthermore been provided with flow limitation devices, in particular valves, functionally coupled to the control device, for influencing the air flow rates. By means of said means switching between settings can be realised and flow rates can be further set.

In one embodiment the ventilation assembly has furthermore been provided with flow limitation devices, in particular valves, functionally coupled to a control device, and wherein the control device has been functionally coupled to the air displacement device, for influencing the air flow rates by setting the flow limitation devices, the air displacement device, or a combination thereof. The control device is able to control the flow rates by means of the valves and air displacement devices, for instance to be coupled to temperatures to be measured, and for instance the capacity and status of the PCM material.

In one embodiment the inbound and outbound ventilating air are separated in the heat exchanger by means of PCM material, in particular PCM elements, wherein in particular the PCM elements comprise a container of synthetic material, which container is provided with PCM material. In that way it is possible to build a compact heat exchanger. Surprisingly it turned out that the use of PCM in a heat exchanger, which at first sight seems undesirable because of possible losses and slowness of the resulting system, is not disadvantageous, on the contrary, it results in a wider applicability and energy reduction. In heat recovery applications the yield, seemingly reduced by the PCM, turns out to affect the heat recovery part of the process less than expected.

In one embodiment the ventilation assembly has further been provided with a temperature sensor for the outbound ventilating air and a temperature sensor for the inbound ventilating air, functionally coupled to the control device, wherein in response to a temperature difference the control device sets the ventilation assembly in the first setting or in the second setting, in particular when the temperature of the inbound ventilating air has a temperature exceeding a set-temperature, and the outbound ventilating air has a temperature exceeding the set-temperature. Functional coupling means, as in other situations, that the parts are able to work together and are able to carry out a joint function. For that purpose, for instance parts may be connected to each other, engage onto each other, drive each other, exchange data wirelessly, and such.

By means of functionally coupled temperature sensors, the control device is able take temperatures and on the basis thereof control or even adjust.

In one embodiment the control device has been provided with a status indicator of the PCM material in the heat exchanger, wherein the status indicator indicates a charged or discharged condition of the PCM material. In that way the use but also the balancing and quantity of material can be optimised.

In one embodiment the PCM material has been selected from PCM having a melting temperature that differs a maximum of 2 degrees from a set-temperature, in particular PCM having a melting temperature that differs a maximum of 1 degree from a set-temperature.

In one embodiment the heat exchanger comprises:

- a series of elements provided with PCM material;
- at least three fluid connections, of which a first fluid connection is in heat exchanging contact with one side of the elements, a second fluid connection is in heat exchanging contact with another side of the elements such that heat exchange between the first and second fluid connection takes place via the PCM material in the elements, and a third fluid connection that is not in heat exchanging contact with the elements;
- at least a first inlet for inbound ventilating air, that connects to one end of the first fluid connection;
- at least a first outlet for inbound ventilating air, that connects to another end of the first fluid connection;
- at least a second inlet for outbound ventilating air, that connects to one end of the second fluid connection and to one end of the third fluid connection;
- at least a second outlet for outbound ventilating air, that connects to another end of the second fluid connection and to another end of the third fluid connection.

The heat exchanger may furthermore comprise a first adjustment device comprising a first or heat recovery setting in which circulation through the third fluid connection has been blocked, and a second setting in which circulation from the second inlet to the second fluid connection has been blocked.

In the second setting outbound ventilating air is diverted via the diversion device.

In one embodiment the heat exchanger comprises:

- a series of elements provided with PCM material;
- at least three fluid connections, of which a first fluid connection is in heat exchanging contact with one side of the elements, a second fluid connection is in heat exchanging contact with another side of the elements such that heat exchange between the first and second fluid connection takes place via the PCM material in the elements, and a third fluid connection that is not in heat exchanging contact with the elements;

- at least a first inlet for inbound ventilating air, that connects to one end of the first fluid connection;
- at least a first outlet for inbound ventilating air, that connects to another end of the first fluid connection;
- at least a second inlet for outbound ventilating air, that connects to one end of the second fluid connection and to one end of the third fluid connection;
- at least a second outlet for outbound ventilating air, that connects to another end of the second fluid connection and to another end of the third fluid connection;
- a first adjustment device comprising a first or heat recovery setting in which circulation through the third fluid connection has been blocked, and a second setting in which circulation from the second inlet to the second fluid connection has been blocked;
- wherein in the second setting outbound ventilating air is diverted via the diversion device.

In one embodiment, in the second setting, the first inlet for inbound ventilating air has been connected to one end of the first fluid connection.

In one embodiment, in the second setting, the adjustment device brings the first inlet in fluid connection with the end of the second fluid connection and the first outlet with the other end of the second fluid connection, so that inbound ventilating air is able to get into heat exchanging contact with the elements.

In one embodiment the heat exchanger further comprises:

- a first air displacement device for setting the inbound ventilating air into motion;
- a second air displacement device for setting the outbound ventilating air into motion.

The invention further relates to a method for ventilating a building or a room in a building by means of the ventilation assembly, wherein in a first setting inbound and outbound ventilating air are brought in heat exchanging contact with each other, wherein they are substantially separated by PCM material, and in a second setting inbound ventilating air is brought in heat exchanging contact with the PCM material and outbound ventilating air bypasses the PCM material, wherein it does not exchange heat with the PCM material and does not exchange heat with the inbound ventilating air.

In one embodiment of the method, the PCM material has been provided in elements filled with PCM material, wherein the inbound ventilating air is brought substantially in contact with one side of the elements and the outbound ventilating air is brought in contact with the other side of the elements, wherein the thickness of the elements has been chosen such that the air-PCM heat exchanger will after a while act like a counterflow heat exchanger having a substantially constant heat transfer.

In one embodiment of the method, in the first setting, when a measured outdoor air temperature is lower than a set heating threshold temperature, a flow rate of inbound and outbound ventilating air is lowered to a set minimum ventilating level.

In one embodiment of the method, in the first setting, when a measured outdoor air temperature exceeds a set heating threshold temperature and a measured air supply temperature is lower than a set thermally comfortable air supply temperature and a measured indoor air temperature exceeds a set-temperature, air flow rates of inbound ventilating air and outbound ventilating air are increased.

In one embodiment of the method, in the second setting, if the outdoor air temperature exceeds a set heating threshold temperature and an air temperature of the building or the ventilating air flowing into the room exceeds a thermally comfortable air supply temperature and an indoor air temperature exceeds the set-temperature and an indoor air temperature exceeds an outdoor air temperature, substantially all inbound ventilating air is brought into heat exchanging contact with the elements filled with PCM material, in particular the inbound ventilating air substantially flows around the elements filled with PCM.

In one embodiment of the method, in the second setting, if the outdoor air temperature exceeds a set heating threshold temperature and an air temperature of the building or the ventilating air flowing into the room exceeds a thermally comfortable air supply temperature and the indoor air temperature exceeds the set-temperature and the indoor air temperature is lower than or equal to the outdoor air temperature, the outbound ventilating air is passed partially along and in heat exchanging contact with the elements filled with PCM material and is passed partially around the elements filled with PCM without exchanging heat with them.

In one embodiment the method relates to a method for ventilating a broiler house provided with the ventilation assembly. With such buildings a good use of PCM material is possible, and a heat exchanger that can be cleaned well can be made.

In one embodiment the method relates to a method for ventilating a commercial and industrial building provided with the ventilation assembly.

The invention further relates to a control device for a ventilation assembly provided with a computer processor and computer program for, when running on the computer processor, carrying out the above-mentioned method.

In one embodiment the ventilation assembly or the method relates to the use of air-PCM heat exchangers in the built-up environment in general, for instance in the agricultural sector, industrial building, commercial building and residential building. The assembly and the method are for instance highly suitable for the ventilation, cooling and heating of broiler houses. An example of a broiler house in for instance the Dutch climate and the tropical climate of Bangkok, Thailand, is discussed. The latter in particular in relation to summertime cooling.

In an air-PCM heat exchanger phase changing material, further referred to as PCM, for instance serves as energy storage wherein it may serve as cooling agent, but it can also discharge stored heat and then serves as heating agent. In one embodiment the PCM contains a mixture of salt and water. PCM may contain an organic or inorganic material. In one embodiment the PCM material contains calcium chloride hexahydrate. This has also been described in the above-mentioned references. During solidifying the PCM is cooled and the environment heated. During melting the PCM is heated and the environment cooled.

In one embodiment the ventilation assembly comprises PCM having a transition temperature of approximately 20-30°C. In one embodiment the PCM has a transition temperature of 22-27°C. For the Dutch climate a ventilation assembly in one embodiment comprises PCM having a transition temperature of approximately 23°C-25°C. In warmer regions a melting temperature exceeding these values will be selected. In other climatic zones, the melting temperature to be set is a function of the climatic zone in question. In the explanation below all this will be further elucidated.

In one embodiment a device or heat exchanger as described in PCT/NL2012/050544 can be used.

In one embodiment either the PCM or the panels as described in WO2013191554 can be used.

The invention further relates to a ventilation assembly as described in this description or according to the claims.

The term "substantially" as used herein will be clear to the expert. The term "substantially" may also comprise an embodiment with "fully", "all" and the like. In one embodiment the adjective "substantially" may also be left out. Where applicable the term "substantially" may relate to 90% or more, such as 95% or more, in particular 99% or more, more in particular 99.5% or more, comprising 100%.

The term "comprising" also includes embodiments in which the term "comprising" means "consisting of'.

Furthermore, the terms first, second, third and the like are used in the description and the claims to distinguish between similar elements and not necessarily to describe a sequence or chronological order. It will be clear that the terms used that way are interchangeable under suitable conditions and that the embodiments of the invention described herein can operate in different orders than described or illustrated herein.

The devices or apparatus that have been described, have among others been described in operation. It will be clear to the expert that the invention is not limited to methods or devices in operation.

It is noted that in the claims, reference numbers when present, should not be considered a limitation of the claims. Use of the word "comprising" and its conjugations do not exclude the presence of further elements or steps other than those stated in the claims. The article "a" does not exclude the presence of several such elements.

The invention can be implemented by means of hardware comprising several distinguishing characteristics, and by means of a suitably programmed computer. In the device claims enumerating such means, several such means can be provided by one and the same piece of hardware. The mere fact that several measures have been summed up in various dependent claims does not mean that a combination of these characteristics cannot be used advantageously.

The invention furthermore relates to a device, method or process provided with one or more of the characterising measures described in the attached description and/or shown in the attached drawings.

It will be clear that the various aspects mentioned in this patent application can be combined and that each individually may qualify for a divisional patent application.

## Brief description of the figures

In the attached figures a ventilation assembly and the method will be elucidated on the basis of figures, graphs and diagrams in which:

Figure 1 shows a ventilation assembly;
figure 2A shows a schematic overview of an air-PCM heat exchanger in which the energy flows have been indicated, in the first setting ventilating and full load heating by heat recovery, and figure 2B in which a relation is indicated between the various variables indicated in figure 2A;
figure 3A shows a schematic overview equivalent to the overview of figure 2A, now under the setting "full load heating/cooling", with
in figure 3B a relation between the variables indicated in figure 3A;
figure 3C shows an electric analogue in the second setting full load cooling and ventilating of the same air-PCM heat exchanger in which the energy flows have been indicated;
figure 4A schematically shows a heat exchanger for the ventilation assembly, in the first setting substantially as ventilating and heat recovering;
figure 4B shows an embodiment of the heat exchanger provided with valves for realising desired flows for the operation as indicated in figure 4A;
figure 5A schematically shows a heat exchanger for the ventilation assembly, in the second setting substantially as ventilating and cooling;
figure 5B shows an embodiment of the heat exchanger provided with valves for realising desired flows for the operation as indicated in figure 5A.

The figures are schematic and not necessarily to scale.

## Description of the embodiments

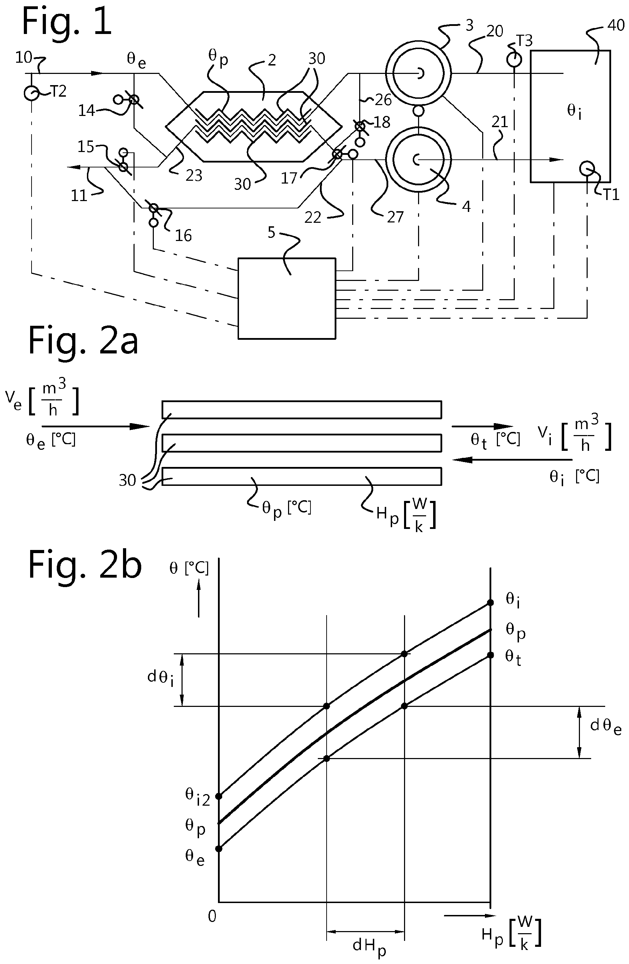

Figure 1 schematically shows a ventilation assembly 1 for a building 40, for instance a broiler house or an office building. The ventilation assembly 1 has been provided with air displacement devices, here by way of example a speed-controlled ventilator 3 for the outbound air and a speed-controlled ventilator 4 for the inbound air. The ventilation assembly 1 has furthermore been provided with a control device 5. By means of one or more temperature sensors, the control device 5 measures the temperature in building 40, and optionally comprises a further sensor for the content of carbon dioxide, or ammonia, in the indoor air, as an indication of indoor air pollution. Sensors may also be used for other air pollutions of the indoor air. The control device 5 has in this case been functionally coupled to the air displacement devices 3, 4 for enabling the setting of an air flow rate of inbound and outbound air. The control device 5 has furthermore been operationally connected to valves 14, 15, 16, 17, 18 and 19. In addition the control device can be connected to temperature sensors T1, T2 and/or T3 as shown. Either by means of wiring or wirelessly, the control device 5 can be connected to the various parts. A connection to valve 18 has not been shown here, but may of course be present indeed. Valves may, if so desired, also be combined.

The ventilation assembly has been provided with a heat exchanger 2 provided with PCM material 30. It regards an easy-to-clean air-PCM heat exchanger consisting of polypropylene (PP) of polyethylene (for instance HDPE) panels 30 filled with PCM material. Said heat exchangers have a low air resistance, for instance 20-30 Pascal.

In one embodiment the heat exchanger 2 has been provided with panels with PCM material 30 which in a first setting ('traditional' heat exchanger) separate air flows from each other in a heat exchanging (or heat recovering) manner. In a second setting, air of one of either flows, flows along the panels with PCM 30 so that the temperature of the air flow is able to change temperature due to exchange of energy with the panels with PCM. The single air flow is heated or cooled.

Heat exchanger 2 has a building-side outlet 20, a building-side inlet 21, an inlet 10 for (fresh) air from the outside of the building 40 and an outlet 11 for discharging air out of the building. In the embodiment of figure 1 the ventilation assembly 1 further has a bypass channel 22 connecting building-side outlet 21 to the outlet 11 bypassing the heat exchanger 2. In that way in one setting, air leaving the building can bypass the heat exchanger 2. Building-side outlet 21 thus can be short-circuited with outlet 23. By means of control valves 14, 15, 16, 17, that are functionally connected to control device 5, it can be set whether air flows via and through the heat exchanger 2, or bypasses it via bypass channel 22.

Via said building-side inbound ventilating channel 21, air can be introduced into a building or a room in a building. Via building-side outbound ventilating air outlet 20, air, also referred to as 'room air', can be discharged out of a building or a room in a building. Via bypass channel 22 said air can also be discharged immediately out(side) of the building. By means of valves 14, 15, 16 and 17 this can be set.

Outdoor air inlet 10 has been connected to an inlet of the heat exchanger 2 for letting in (fresh) outdoor air into a building. An outlet 11 has been connected to (heat exchanger) outlet 23. By means of the heat exchanger 2 provided with PCM material, either building-side outbound air (room air) is able to exchange heat with inbound air. The heat exchanger 2 then functions as a 'traditional' heat recovery device. However, this does not include the time delay occurring in the process and additional heating made possible as compared to the traditional heat recovery apparatus. This mostly occurs in discontinuous situations. For instance, in office buildings ventilation and temperature control is required during office hours. Outside office hours this is required to a limited extent only, if at all. Often by the end of the workday the temperature will be relatively high and the PCM material has absorbed relatively much heat. When starting up immediately before or at the beginning of the workday, said stored heat can be used to pre-heat the relatively cool outdoor air. This can also take place in the first setting. The inbound outdoor air will then be relatively cool, the indoor air will usually be warmer, and the PCM material will be even warmer, relatively speaking, and able to give off heat.

When valve 16 has been opened, valves 15 and 17 and 19 have been closed and valve 14 has been opened, bypass channel 22 becomes operational, and room air will bypass the heat exchanger 2. Inbound outdoor air will be directed along the PCM in the heat exchanger 2 and depending on the condition/temperature of the PCM material in the heat exchanger 2 either be cooled during the day and heated during the night.

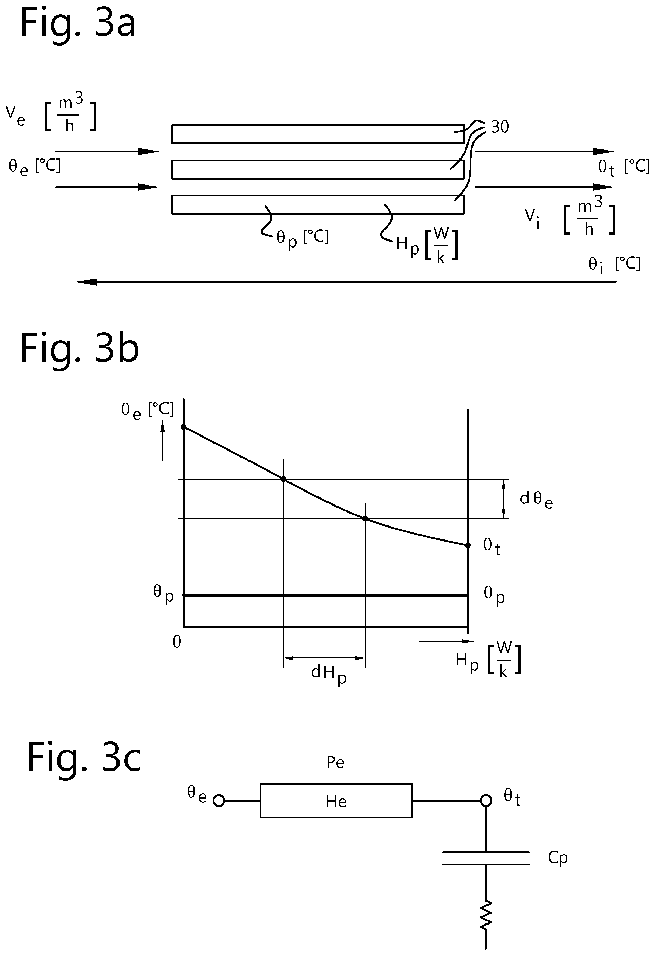

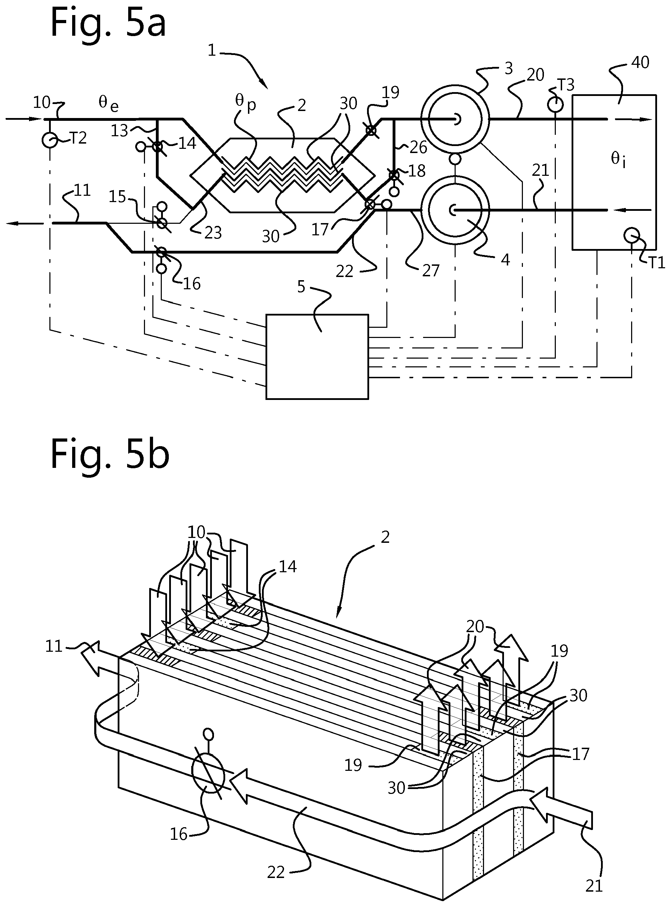

On the basis of figures 3A, 3B, 5A and 5B first the second setting of the ventilation assembly will be discussed at full load cooling or heating in general situations. The depictions are schematic, in figure 3A a flow channel for inbound (outdoor) air is shown. The air flows along PCM elements 30. Via the PCM elements 30 and the PCM included therein, heat exchange will take place in the (single) flow.

The variables in figures 2A, 2B, 3A and 3B are:

$\theta_e$ Outdoor air temperature [°C]
$\theta_t$ Supply air temperature [°C]
$\theta_i$ Indoor air temperature [°C]
$\theta_p$ PCM-temperature [°C]
$\dot{V}_e$ Air supply flow rate [m³/h]

$\dot{V}_l$ Air discharge flow rate [m³/h]

$H_e$ Specific capacity air supply flow $\text{rate} = \frac{1}{3}\dot{V_e}[\text{W/K}]$

$H_p$ Specific capacity PCM [W/K]

Based on figure 3B, on the basis of the flow of (ventilating) air, the following differential equation results for the 'location' position:

$$H_e \, d\theta_e = -\big(\theta_e - \theta_p\big)dH_p$$

With $F = e^{-\frac{H_p}{H_e}}$ the above differential equation results in:

$$\theta_t = \theta_p + \big(\theta_e - \theta_p\big)F$$

For the cooling capacity then results:

$$P_e = H_e(\theta_e - \theta_t) = H_e(1 - F)(\theta_e - \theta_p)$$

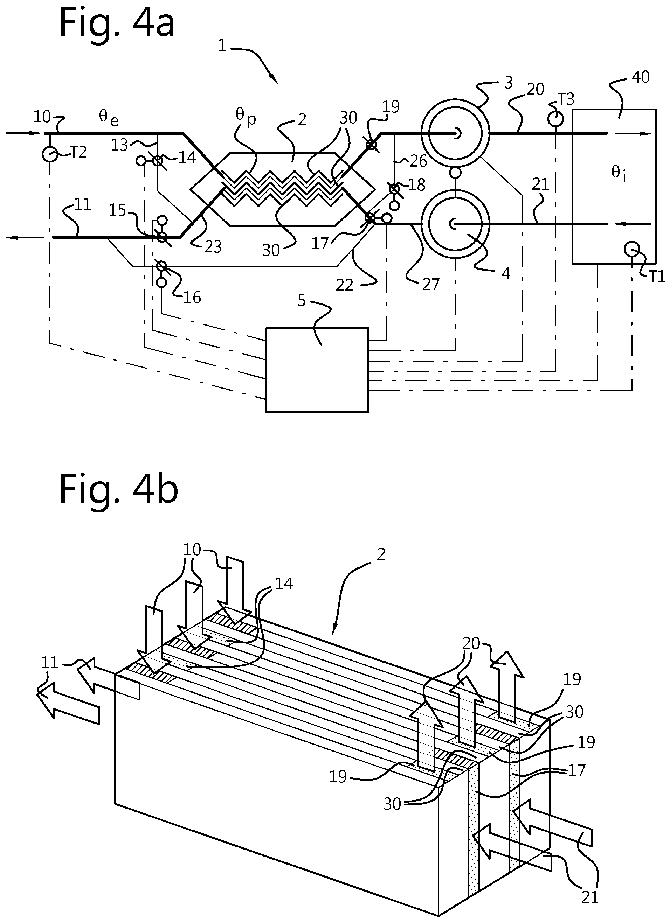

On the basis of figures 2A, 2B, 4A and 4B the first setting of the same ventilation assembly will be discussed in which the inbound and outbound air flows exchange energy with each other via the PCM elements 30. In figure 2A an inbound (outdoor) air flow and an outbound (indoor) air flow are in counterflow with each other. For each only one channel is shown. A flow flows along one side of a PCM element and the other flow flows along the opposite side of said PCM element 30. The flows exchange energy via a PCM element 30 (and therefore via the PCM therein).

Figure 3B shows a curve showing the relation between the temperature and the specific capacity of the PCM.

Figure 3C shows a simple electric analogue for the "time part" of the air-PCM heat exchanger, in which $C_p$ is the heat capacity of PCM in [Wh/K]. Based on figure 3C the differential equation results:

$$P_e = H_e(1 - F)\big(\theta_e - \theta_p\big) = C_p \frac{d\theta_p}{dt}$$

With $\tau = \frac{c_p}{H_e \cdot (1-F)}$ results:

$$\tau \cdot \frac{d\theta_p}{dt} + \theta_p = \theta_e$$

Figure 2A shows the heat exchanger during the first setting. In which:

$\theta_i$ is the indoor or room air temperature [°C]

$\theta_e$ is the outdoor air temperature [°C]

$H_i$ is the specific capacity air supply flow $\text{rate} = \frac{1}{3}\dot{V_i}[\text{W/K}]$

Based on figure 2B the following (differential) equations result:

$$dP_p = (\theta_i - \theta_e)dH_p$$

$$dP_e = H_e d\theta_e$$

$$dP_i = H_i d\theta_i$$

$$dP_p = -dP_e$$

$$dP_p = -dP_i$$

On the condition that $\dot{V}_l = \dot{V}_e$, meaning balanced ventilation, and with $X = \dfrac{H_p}{H_i} = \dfrac{H_p}{H_e}$ the 5 (differential) equations result in:

$$\eta = \frac{X}{1 + X}$$

In the following numerical calculations for an office building the successive parameters will be discussed again. One embodiment of the ventilation assembly regards the use in a broiler house. Below, such a use and design considerations will be discussed first. Then a use in for instance a commercial and industrial building will be discussed, and design considerations will be given.

In for instance a broiler house chicks weighing 40 g can be fattened into broilers weighing 2.4 k in a time span of 42 days. In a broiler house an annual maximum of approximately 8 fattening cycles may take place. The comfortability temperature of chicks is approximately 33°C and for adult broilers approximately 20°C. When there is sufficient air movement in the chicken's living zone, the comfortability temperature due to the wind chill factor can be increased from 20°C to 25°C and maybe even more. Regarding young chicks this means minimum air movement and maximum heat recovery, and regarding adult broilers maximum air movement and maximum cooling.

A traditional ventilation assembly then functions as follows. In the first week the ventilation assembly runs at a minimum ventilation flow rate in order to discharge the waste products of the chicks ($CO_2$, Ammonia). The heating device will perhaps be operational at full load to keep the broiler house at a temperature of 33°C. In the last week on the other hand, when the adult broilers are mature, the heating device will no longer be operational. The broiler house will then be ventilated at more than the minimum level, meaning at a larger flow rate than required for discharging waste materials. Using, or because of, the wind chill factor, the ventilation assembly starts functioning like a cooling installation at an excess (excess flow rate) of ventilating air. An air supply flow rate of 13 to 15 m³/h per chicken, a standard value in traditional installations for broiler houses, will then be insufficient to realise the ideal indoor temperature and additional cooling will need to be provided for.

As stated above, a broiler fattening cycle in one embodiment takes 42 days (6 weeks). In said 42 days, chicks are fattened into broilers. During said cycle the ideal indoor temperature of the broiler houses changes according to the table below.

| Week | Ideal temperature [°C] | Ideal temperature (incl. 'chill effect') [°C] |
|------|------------------------|-----------------------------------------------|
| 0 | 33 | 33 |
| 1 | 30 | 31.5 |
| 2 | 27 | 30 |
| 3 | 24 | 29 |
| 4 | 21 | 27.5 |
| 5 | 19 | 26 |
| 6 | 18 | 25 |

The table above indicates said ideal temperatures (Cobb broiler management guide (2012)). Due to the air flow in a broiler house, the broilers experience a cooler temperature than the actual air temperature, this is also referred to as the 'wind chill' effect. The young chicks are hardly bothered by the wind chill factor during heating operation, as the ventilation flow rate will then be adjusted back to a minimum.

For the Netherlands two extreme dimensioning situations can be distinguished. The first situation is the heating of the broiler houses containing 1-week old chicks in wintry conditions at a minimum ventilation flow rate. The second situation is cooling the broiler houses with 6-week old mature broilers in summery conditions with an excess of air in connection with the wind chill factor. It turned out that by using a ventilation assembly with PCM-heat recovery the air supply air flow can be lower than in traditional installations. It turned out that the air supply flow rate in one embodiment had been halved or was even three times as low for realising the same daytime indoor temperature as in a traditional installation.

A further example of the ventilation assembly is discussed below for a building such as an office building, but also the above-mentioned broiler house. In this embodiment the ventilation assembly is also referred to as 'PCM high efficiency-heat recovery ventilator convector'. In figures 4a and 5s such an assembly is shown in two different operating conditions. In figures 4b and 5b, settings of a possible embodiment of the heat exchanger 2 for the set-up of figures 4a and 5a, respectively, are shown. In this case the valves 14, 16 and 17 are for instance slides blocking the passages/channels. Dotted lines represent opened, hatched lines represent closed. The PCM elements 30 have also been shown, and for instance each one or more PCM elements as described in WO2013191554.

Summarising the embodiment regards a PCM high efficiency-heat recovery ventilator convector with wintry heat recovery and summery cooling. The PCM high efficiency-heat recovery ventilator convector is in this case for instance dimensioned for summery full load cooling operation. Subsequently the seasonal operation is described taking full load wintry heating as starting point.

Below follows a model calculation for instance for offices.

### 1. Dimensioning at full load perceptible cooling capacity.

In this case starting point is one OC AUTARKIS 198 mm HDPE panel (for instance described in WO2013191554, herein included by reference or as if fully copied) filled with 'PCM 23', meaning a melting temperature of approximately 23°C, and an adjacent air slit of 3-5 mm, specifically approximately 4 mm. The calculation relates to an office floor area of 10 $m^2$ having a perceptible cooling load of 50 $W/m^2$ (95% of the offices).

| | | |
|---|---|---|
| *Dimensions HDPE panel.* | *[m]* | $d_p \times l_p \times b_p = 0.013 \times 0.570 \times 0.198$ |
| *Heating surface panel* | *[$m^2$]* | $A_p = 2 \times 0.570 \times 0.198 = 0.226$ |
| *PCM mass HDPE panel.* | *[kg]* | $m_p = 1.3$ |
| *Enthalpy PCM* | $\left[\dfrac{Wh}{kg}\right]$ | $h_p = 48$ |
| *Melting range PCM* | *[K]* | $\theta_{p,max} - \theta_{p,min} = 4$ |
| *The heat capacity panel* | $\left[\dfrac{Wh}{K}\right]$ | $C_p = \dfrac{m_p h_p}{\theta_{p,max} - \theta_{p,min}} = 15.6$ |
| *HDPE thickness* | *[m]* | $d_{HDPE} = 0.0006$ |
| *The heat conduction HDPE* | $\left[\dfrac{W}{m^2 K}\right]$ | $\lambda_{HDPE} = 0.6$ |
| *The air slit* | *[m]* | $d_v = 0.004$ |
| *The convective heat transfer* | $\left[\dfrac{W}{m^2 K}\right]$ | $\alpha_v = \dfrac{0.1066}{d_v} = 26.6$ |
| *The heat passage coefficient* | $\left[\dfrac{W}{m^2 K}\right]$ | $U_p = \dfrac{1}{\frac{1}{26.6} + \frac{0.0006}{0.6}} = 26.0$ |
| *The $H_p$ value of the panel* | $\left[\dfrac{W}{K}\right]$ | $H_p = U_p A_p = 5.87$ |
| *The air flow rate per slit meaning the air flow rate **around a PCM panel** is* | $\left[\dfrac{m^3}{h.panel}\right]$ | $V_v = 3.6$ |

(continued)

| | | |
|---|---|---|
| *The $H_v$ value per air slit* | $\left[\dfrac{W}{K}\right]$ | $H_v = \rho_v c_v V_v = 1.2$ |
| *The F factor* | | $F = e^{-\frac{H_p}{H_v}} = e^{-\frac{5.87}{1.2}} = 0.01$ |
| *The time constant [h]* | | $\tau_p = \dfrac{c_p}{(1-F)H_v} = \dfrac{15.6}{(1-0.01)1.2} = 13.1$ |
| *The time delay [h]* | | $\Delta t = \dfrac{invtan\ \omega\tau_p}{\omega} = \dfrac{invtan\ \frac{\pi}{12}13.1}{\frac{\pi}{12}} = 4.9$ |
| *The damping* | [$K$] | $\dfrac{1}{\sqrt{1+(\omega\tau)^2}} = 0.28$ |
| *The outdoor temperature* | [°C] | $\theta_v = 23 + 6.5\sin\dfrac{\pi}{12}(t-3)$ |
| *with t = 0 at 06.00 AM* | | |
| *The air supply temperature* | [°C] | $\theta_v = 23 + 1.8\sin\dfrac{\pi}{12}\left(12 - \right.$ |
| $\left.(3 + 4.9)\right)$ | | |
| *Indoor temperature NEN 15251* | [°C] | $\theta_{i,max} = 27$ |

Presuppose a south orientation wherein the maximum cooling load in the room occurs around 12.00 hours, then an air supply temperature results:

*The air supply temperature* $\quad \theta_v = 23 + 1.8\sin\dfrac{\pi}{12}\left(12 - (3+4.9)\right) = 24.6[°C]$

*The perceptible cooling capacity of one PCM 198 / 23 panel having an air flow rate of* $\quad 3.6\left[\dfrac{m^3}{h.panel}\right]$ *will then be* $\quad P = \dfrac{3.6}{3}(27 - 24.6) = 7.2\left[\dfrac{W}{panel}\right]$

Now presuppose that 10 square meters of an office floor area have to be cooled and the maximum calculated perceptible cooling load is for instance 500 Watt, then:

| | |
|---|---|
| *Number of PCM panels to be installed* | $\dfrac{500}{7.2} = 70$ |
| *The air supply flow rate is* | $70 \times 3.6 = 252\left[\dfrac{m^3}{h}\right]$ |
| *The air speed in the slit* | $v = \dfrac{V_v}{d_v l_p} = \dfrac{3.6}{3.600 \times 0.004 \times 0.570} = 0.44\left[\dfrac{m}{s}\right]$ |

## 2. The functioning.

### 2.1. Full load wintry heating operation indoor temperature 20°C and an outdoor temperature of -10°C.

The minimum required ventilation flow rate in offices for instance is $30\left[\dfrac{m^3}{h.person}\right]$ with one person per 10 square meter. In winter the flow rate of the PCM ventilator convector is adjusted back from $252\left[\dfrac{m^3}{h}\right]$ (see dimensioning summer) to $30 \left[\frac{\mathrm{m^3}}{\mathrm{h}}\right]$. As it regards laminar flow, the forced convective heat transfer remains approximately the same as during cooling. The air-PCM heat exchanger now functions as high efficiency heat recovery. With the following physical variables per panel:

*A heat resistance*
$$R = 2\left(\frac{1}{\alpha} + \sum \frac{d}{\lambda}\right) = 2\left(\frac{1}{26.6} + \frac{0.0006}{0.6} + \frac{0.0118}{1.0}\right) = 0.10 \left[\frac{m^2 K}{W}\right]$$

*A heat passage*
$$U = \frac{1}{R} = 9.9 \left[\frac{W}{m^2 K}\right]$$

*And a UA value*
$$UA = (0.570 \times 0.198) \times 9.9 = 1.12 \left[\frac{W}{K}\right]$$

*An air flow rate of* $\frac{30}{70} = 0.429 \left[\frac{m^3}{h}\right]$ *now flows **on both sides of the PCM panel,***

*Or*

$$H_v = \frac{0.429}{3} = 0.143 \left[\frac{W}{K}\right]$$

*X value for a counterflow heat exchanger then is:*

$$x = \frac{UA}{H_v} = \frac{1.12}{0.143} = 7.8$$

*The perceptible temperature efficiency of the PCM heat exchanger then is:*

$$\eta = \frac{x}{1+x} = 89[\%]$$

Presuppose it freezes outside and the minimum outdoor temperature is $\theta_e = -10[°C]$. The thermally comfortable minimum adaptive indoor temperature then is

$$\theta_i = 21.5 + 0.15\,\theta_e = 21.5 + 0.15 \cdot -10 = 20[°C]\,.$$

At an indoor air temperature of 20°C and the outdoor air temperature of -10°C the air supply temperature then is:

$$\theta_t = \theta_e + \eta(\theta_i - \theta_e) = -10 + 0.89(20 - -10) = 16.6[°C].$$

**2.2. Partial** load **cooling operation spring and autumn, this is the area of the <u>direct free outdoor air cooling</u>. Indoor temperature** 23°C **and the outdoor air temperature** 10°C.

The outdoor air temperature is too low to be supplied directly to the room as comfortable air supply temperature. It needs to be heated by means of the high efficiency heat recovery operation. The flow rate (by means of number of revolutions) of both ventilators now needs to be increased to full load operation while maintaining the heat recovery mode. Contrary to the dimensioning for full load cooling operation the air speed between the slits increases from 0.44 naar $0.88 \left[\frac{\mathrm{m}}{\mathrm{s}}\right]$. It still regards laminar flow. An air flow rate of $\frac{252}{70} = 3.6 \left[\frac{\mathrm{m^3}}{\mathrm{h}}\right]$ now flows **on both sides of the PCM panel.** Resulting in:

$$H_v = \frac{3.6}{3} = 1.2 \left[\frac{W}{K}\right]$$

X value for a counterflow heat exchanger will then be:

$$x = \frac{UA}{H_v} = \frac{1.12}{1.2} = 0.93$$

The perceptible temperature efficiency of the PCM heat exchanger then drops to:

$$\eta = \frac{x}{1+x} = 48[\%]$$

If the indoor air temperature is 23°C and the outdoor air temperature is 10°C, an air supply temperature of 16.3°C results. The unit then supplies a perceptible cooling capacity of

$$P = \frac{252}{3}(23 - 16.3) = 560[W]$$

When this is too much cooling, it will be adjusted back to for instance 50%, thus resulting in:

$$H_v = \frac{1.8}{3} = 0.6 \left[\frac{W}{K}\right]$$

X value for a counterflow heat exchanger will then be:

$$x = \frac{UA}{H_v} = \frac{1.12}{0.6} = 1.87$$

The perceptible temperature efficiency of the PCM heat exchanger then drops to:

$$\eta = \frac{x}{1+x} = 65[\%]$$

The average outdoor air temperature is $\theta_e$ = 10 [°C]. The thermally comfortable adaptive indoor temperature will then be

$$\theta_i = 21.5 + 0.15\,\theta_e = 21.5 + 0.15 \cdot 10 = 23[°C]\ .$$

At an indoor air temperature of 20°C and the outdoor air temperature of -10°C the air supply temperature will then be:

$$\theta_t = \theta_e + \eta(\theta_i - \theta_e) = -10 + 0.89(20 - 10) = 18.5[°C].$$

If the indoor air temperature is 23°C and the outdoor air temperature is 10°C, the air supply temperature therefore will be 18.5°C. The unit then supplies a perceptible cooling capacity of

$$P = \frac{126}{3}(23 - 18.5) = 189[W]$$

**2.3. Full load cooling operation summer, this is in the area of the <u>indirect free outdoor air cooling</u>. Indoor temperature 27°C and the maximum outdoor air temperature 30°C.**

See dimensioning at the start. It regards the operation by means of **in**direct free outdoor air cooling contrary to the operation according to the above paragraph regarding direct free outdoor air cooling. The PCM now has to be discharged at night.

- With broilers for instance, the situation of minimum ventilation and maximum heating will perhaps occur 8 times a year, each time when new chicks are placed in the fattening broiler house for a 42-day fattening cycle. This operational condition will furthermore have to prevail day and night in case of chicken.
- In office buildings it will regard the decentralised PCM ventilator convectors per room or per 20 m$^2$ meter floor area. In case of broiler houses it will likely regard larger centralised PCM ventilator convectors, more in the form of air handling units.

In one embodiment the air-PCM heat exchanger 2 is dimensioned for the summery cooling situation. In the example for instance 600 m$^3$/h for 20 m$^2$ of office floor area in the Netherlands. This setting is shown in figures 5A and 5B. Outdoor air inlet 10 has now been coupled to inlet channel so that all inbound outdoor air now contacts the PCM and can be cooled. Building-side inbound ventilating air channel 21 has now been coupled to outlet channel 11.

Building-side outbound ventilating air channel 27 has now been coupled to bypass channel 20 so that the outbound air bypasses the heat exchanger and does not contact the PCM.

The valves 14, 15, 16, 17 that are among others shown in the figure 1, 4A and 5A can be designed as combined slides as schematically shown in figures 4B and 5B. In the situation of figure 4A outdoor air 21 enters and the slides 17 are open. The air flows along a side of PCM elements 30 and leaves the heat exchanger 2 at arrows 11. Air from the building, indicated by arrows 10, passes through the open slides, shown in hatched lines. Slides 14 (in dotted lines) are closed. The air, indicated with arrows 20, leaves the heat exchanger 2, via open slides, indicated in dotted lines. The other slides, indicated in hatched lines, are closed on this side. The air from the building flows along another side of the PCM elements 30 than the inbound air does. Both flows are largely in counterflow with each other, and exchange energy via the PCM elements 30.

In figure 5B the air from the building bypasses the heat exchanger 2 via fluid connection 22. The slides 17 are now closed. All other slides are now open, that means both the slides 14 and the slides at the opposing upper end. Five arrows 10 are now inbound and five arrows 20 are outbound. The cross-sectional area of the inbound air through the heat exchanger now is larger than in the first setting according to figure 4B. In one embodiment the cross-sectional area for the fluid connection for the inbound air from outside of the building in the second setting of figure 5B is at least twice as large as in the first setting according to figure 4B.

It will be clear that the openings in the heat exchanger 2 may also be positioned such that one of either flows 10, 20, the inbound flow 10 or outbound flow 20, that exit the heat exchanger at the upper side in the depiction, can also flow out at the bottom side of the heat exchanger 2.

The control of the ventilation assembly for an office building may be as follows:
First setting: ventilating and full load heating by heat recovery by means of a PCM heat exchanger. This corresponds to what has been described above in 2.1.

Flow rate supplied air equals flow rate discharged air. If for instance a measured outdoor air temperature T2 is lower than a (set) heating threshold the supply and discharge ventilators 3, 4 are adjusted back (the flow rate is lowered for instance by lowering the number of revolutions) to a minimum ventilation level. Said minimum corresponds to a set minimum ventilation flow rate. The valves 14, 16 and 18 close and valves 15, 17 and 19 open. If the measured temperature T1 in the building or a room is lower than the set heating temperature or a set or 'setpoint' temperature an additional heating becomes operational if so desired.

Ventilating and partial load cooling by means of heat recovery by means of the PCM heat exchanger. This corresponds to what has been described above in 2.2. If the measured outdoor temperature T2 exceeds the (set) heating threshold <u>and</u> the measured air supply temperature T3 is lower than a (set) thermally comfortable air supply temperature <u>and</u> the measured indoor air temperature T1 exceeds the set or 'setpoint' temperature, respective air flow rates the supply and discharge ventilators 3, 4 are increased.

Ventilating and partial load cooling by means of the PCM heat exchanger. This corresponds to what has been described above in 2.3.

If T2 exceeds the heating threshold <u>and</u> T3 exceeds the thermally comfortable air supply temperature <u>and</u> T1 exceeds the 'setpoint' temperature <u>and</u> T1 exceeds T2, then the valves 14, 16 and 18 are opened and valves 15, 17 and 19 are closed.

Ventilating and full load cooling by means of the PCM heat exchanger. This also corresponds to what has been described above in 2.3.

If T2 exceeds the heating threshold <u>and</u> T3 exceeds the thermally comfortable air supply temperature <u>and</u> T1 exceeds the 'setpoint' temperature <u>and</u> T1 is smaller than or equal to T2, then the valve 14 is opened and valve 15 is partially closed to a stop limit.

In office buildings it will then be possible that no or minimum additional cooling, for instance compression cooling, suffices, as the outdoor air flow rate can be increased independent of the ventilation flow rate. Additional heating may however be required in buildings that are poorly insulated.

It will be clear that the above description is included to illustrate the operation of preferred embodiments of the invention and not to limit the scope of the invention. Starting from the above explanation many variations that fall within the spirit and scope of the present invention will be evident to an expert.

Ventilating and full load cooling by means of the PCM heat exchanger. This also corresponds to what has been described above in 2.3.

If T2 exceeds the heating threshold <u>and</u> T3 exceeds the thermally comfortable air supply temperature <u>and</u> T1 exceeds the 'setpoint' temperature <u>and</u> T1 is smaller than or equal to T2, then the valve 14 is opened and valve 15 is partially closed to a stop limit.

In office buildings it will then be possible that no or minimum additional cooling, for instance compression cooling, suffices, as the outdoor air flow rate can be increased independent of the ventilation flow rate. Additional heating may however be required in buildings that are poorly insulated.

**Claims**

1. A ventilation assembly (1) for a building, comprising:

   - a heat exchanger (2) for bringing inbound ventilating air and outbound ventilating air in heat exchanging contact with each other, and provided with PCM material (30);
   - an air displacement device (3, 4) for setting ventilating air into motion;
   - a control device (5) having a computer processor, being functionally coupled to the heat exchanger (2) and the air displacement device (3, 4), and being provided with a minimum requirement of ventilation flow rate and configured for putting the ventilation assembly (1) in:
   - a first setting in which inbound ventilating air has a first air supply flow rate, outbound ventilating air has a first air discharge flow rate, the inbound and outbound ventilating air are brought into heat exchanging contact with each other in the heat exchanger (2) at least partially over the PCM material, and
   - a second setting in which inbound ventilating air has a second air supply flow rate and in the heat exchanger (2) is substantially in heat exchanging contact with the PCM material (30), wherein inbound and outbound ventilating air are not in heat exchanging contact in the heat exchanger (2), and wherein the second air supply flow rate exceeds the minimum requirement of ventilation flow rate for creating extra cooling.

2. Ventilation assembly according to claim 1, wherein the second air supply flow rate is at least twice as large as the first air supply flow rate.

3. Ventilation assembly (1) according to claim 1 or 2, wherein in the first and/or second setting the air displacement device has been set for a balanced ventilation.

4. Ventilation assembly (1) according to any one of the preceding claims, wherein the air displacement device comprises an inbound air displacement device for displacing inbound ventilating air and an outbound air displacement device for displacing outbound ventilating air.

5. Ventilation assembly (1) according to any one of the preceding claims, wherein the inbound and outbound ventilating air are separated in the heat exchanger (2) by means of PCM material (30), in particular PCM elements, wherein in particular the PCM elements comprise a container of synthetic material, which container is provided with PCM material.

6. Ventilation assembly (1) according to any one of the preceding claims, further provided with a temperature sensor for the outbound ventilating air and a temperature sensor for the inbound ventilating air, functionally coupled to the control device (5), wherein in response to a temperature difference the control device (5) sets the ventilation assembly (1) in the first setting or in the second setting, in particular when the temperature of the inbound ventilating air has a temperature exceeding a set-temperature, and the outbound ventilating air has a temperature exceeding the set-temperature.

7. The ventilation assembly (1) according to any one of the preceding claims, wherein the heat exchanger (2) comprises:

   - a series of elements provided with PCM material;
   - at least three fluid connections, of which a first fluid connection is in heat exchanging contact with one side of the elements, a second fluid connection is in heat exchanging contact with another side of the elements such that heat exchange between the first and second fluid connection takes place via the PCM material in the elements, and a third fluid connection that is not in heat exchanging contact with the elements;
   - at least a first inlet for inbound ventilating air, that connects to one end of the first fluid connection;
   - at least a first outlet for inbound ventilating air, that connects to another end of the first fluid connection;
   - at least a second inlet for outbound ventilating air, that connects to one end of the second fluid connection and to one end of the third fluid connection;
   - at least a second outlet for outbound ventilating air, that connects to another end of the second fluid connection and to another end of the third fluid connection;
   - a first adjustment device comprising a first or heat recovery setting in which circulation through the third fluid connection has been blocked, and a second setting in which circulation from the second inlet to the second fluid connection has been blocked;
   - wherein in the second setting outbound ventilating air is diverted via the diversion device.

8. The ventilation assembly (1) according to any one of the preceding claims, wherein in the heat exchanger (2) in in the second setting the first inlet for inbound ventilating air is connected to one end of the first fluid connection, wherein in particular the second setting of the adjustment device puts the first inlet in fluid connection with the end of the second fluid connection and the first inlet with the other end of the second fluid connection, so that inbound ventilating air may come into heat exchanging contact with the elements.

9. The ventilation assembly (1) according to any one of the preceding claims, wherein the heat exchanger (2) further comprises:

   - a first air displacement device for setting the inbound ventilating air into motion;
   - a second air displacement device for setting the outbound ventilating air into motion.

10. Method for ventilating a building or a room in a building by means of the ventilation assembly (1) according to any one of the preceding claims, wherein in a first setting inbound and outbound ventilating air are brought in heat exchanging contact with each other, wherein they are substantially separated by PCM material, and in a second setting inbound ventilating air is brought in heat exchanging contact with the PCM material and outbound ventilating air bypasses the PCM material wherein it does not exchange heat with the PCM material and does not exchange heat with the inbound ventilating air.

11. Method according to the preceding claim, wherein the PCM material has been provided in elements filled with PCM material wherein the inbound ventilating air is brought substantially in contact with one side of the elements and the outbound ventilating air is brought in contact with the other side of the elements, wherein the thickness of the elements has been chosen such that the air-PCM heat exchanger (2) will after a while act like a counterflow heat exchanger having a substantially constant heat transfer.

12. Method according to any one of the preceding claims 10-11, wherein in the first setting, when a measured outdoor air temperature is lower than a set heating threshold temperature, a flow rate of inbound and outbound ventilating air is lowered to a set minimum ventilating level, in particular, wherein in the first setting when a measured outdoor air temperature exceeds a set heating threshold temperature and a measured air supply temperature is lower than a set thermally comfortable air supply temperature and a measured indoor air temperature exceeds a set temperature, air flow rates of inbound ventilating air and outbound ventilating air are increased.

13. Method according to any one of the preceding claims 10-11 wherein in the second setting if the outdoor air temperature exceeds a set heating threshold temperature and an air temperature of the building or the ventilating air flowing into the room exceeds a thermally comfortable air supply temperature and an indoor air temperature exceeds the set temperature and an indoor air temperature exceeds an outdoor air temperature, substantially all inbound ventilating air is brought into heat exchanging contact with the elements filled with PCM material, in particular the inbound ventilating air substantially flows around the elements filled with PCM, wherein in particular the second setting if the outdoor air temperature exceeds a set heating threshold temperature and an air temperature of the building or the ventilating air flowing into the room exceeds a thermally comfortable air supply temperature and the indoor air temperature exceeds the set temperature and the indoor air temperature is lower than or equal to the outdoor air temperature, the outbound ventilating air is passed partially along and in heat exchanging contact with the elements filled with PCM material and is passed partially around the elements filled with PCM without exchanging heat with them.

14. A computer program product for a control device (5) for a ventilation assembly (1), which when running on the computer processor of the control device (5) of a ventilation assembly according to any one of claims 1-9, carries out the method according to any one of the preceding claims 10-13.

**Patentansprüche**

1. Lüftungssystem (1) für ein Gebäude, umfassend:

   - einen Wärmetauscher (2) zum Einleiten von eintretender Lüftungsluft und ausströmender Lüftungsluft in Wärmeaustauschkontakt miteinander und mit PCM-Material (30) versehen;
   - eine Luftverdrängungsvorrichtung (3, 4) zum in Bewegung stellen der Ventilationsluft;
   - eine mit dem Wärmetauscher (2) und der Luftverdrängungsvorrichtung (3, 4) funktionell gekoppelte Steuervorrichtung (5) mit einem Computerprozessor, die mit einer Mindestanforderung für den Lüftungsvolumenstrom ausgestattet ist und das Lüftungssystem (1) einstellt in:
   - eine erste Einstellung, bei der ankommende Lüftungsluft eine erste Luftzufuhrströmungsrate hat, ausströmende Lüftungsluft eine erste Luftausströmungsströmungsrate hat, die ankommende und abfließende Lüftungsluft wird zumindest im Wärmetauscher (2) in Wärmeaustauschkontakt gebracht teilweise über das PCM-Material und
   - eine zweite Einstellung, bei der ankommende Lüftungsluft eine zweite Luftzufuhrströmungsrate hat und in dem Wärmetauscher (2) im Wesentlichen in Wärmeaustauschkontakt mit dem PCM-Material (30) steht, wobei ankommende und abgehende Lüftung Luft befindet sich nicht in einem Wärmeaustauschkontakt in dem Wärmetauscher (2), und wobei die zweite Luftversorgungsströmungsrate die Mindestanforderung der Ventilationsströmungsrate zum Erzeugen einer zusätzlichen Kühlung übersteigt.

2. Lüftungssystem (1) nach Anspruch 1, wobei die zweite Luftzufuhrströmungsrate mindestens zweimal so groß wie die erste Luftzufuhrflussrate ist.

3. Lüftungssystem (1) nach Anspruch 1 oder 2, wobei in der ersten und / oder zweiten Einstellung die Luftverdrängungsvorrichtung auf eine ausgeglichene Belüftung eingestellt ist.

4. Lüftungssystem (1) nach einem der vorhergehenden Ansprüche, wobei die Luftverdrängungsvorrichtung eine ankommende Luftverdrängungsvorrichtung zum Versetzen von einströmender Belüftungsluft und eine abgehende Luftverdrängungsvorrichtung zum Verdrängen von abfließender Belüftungsluft umfasst.

5. Lüftungssystem (1) nach einem der vorhergehenden Ansprüche, wobei die ein- und ausströmende Lüftungsluft im Wärmetauscher (2) mittels PCM-Material (30), insbesondere PCM-Elementen, abgetrennt wird, wobei insbesondere die PCM-Elemente umfassen einen Behälter aus synthetischem Material, wobei der Behälter mit PCM-Material versehen ist.

6. Lüftungssystem (1) nach einem der vorhergehenden Ansprüche, die ferner mit einem Temperatursensor für die ausströmende Belüftungsluft und einem Temperatursensor für die eintretende Belüftungsluft versehen ist, der funktionell mit der Steuervorrichtung (5) gekoppelt ist, wobei in Abhängigkeit von einer Temperaturdifferenz die Steuereinrichtung (5) die Lüftungsbaugruppe (1) in der ersten Einstellung oder in der zweiten Einstellung einstellt, insbesondere wenn die Temperatur der eintretenden Lüftungsluft eine Temperatur überschreitet, die eine Solltemperatur überschreitet, und die ausströmende Lüftungsluft aufweist eine Temperatur, die die eingestellte Temperatur übersteigt.

7. Lüftungssystem (1) nach einem der vorhergehenden Ansprüche, wobei der Wärmetauscher (2) umfasst:

   - eine Reihe von Elementen, die mit PCM-Material versehen sind;
   - mindestens drei Fluidverbindungen, von denen eine erste Fluidverbindung in Wärmeaustauschkontakt mit einer Seite der Elemente steht, eine zweite Fluidverbindung in Wärmeaustauschkontakt mit einer anderen Seite der Elemente steht, derart, dass ein Wärmeaustausch zwischen dem ersten und dem zweiten Fluid erfolgt Verbindung erfolgt über das PCM-Material in den Elementen und eine dritte Fluidverbindung, die nicht in Wärmeaustauschkontakt mit den Elementen steht;

- mindestens einen ersten Einlass für ankommende Lüftungsluft, der mit einem Ende der ersten Fluidverbindung verbunden ist;

- mindestens einen ersten Auslass für ankommende Lüftungsluft, der mit einem anderen Ende der ersten Fluidverbindung verbunden ist;

- mindestens einen zweiten Einlass für ausströmende Luft, der mit einem Ende der zweiten Fluidverbindung und mit einem Ende der dritten Fluidverbindung verbunden ist;

- mindestens einen zweiten Auslass für ausströmende Luft, der mit einem anderen Ende der zweiten Fluidverbindung und mit einem anderen Ende der dritten Fluidverbindung verbunden ist;

- eine erste Einstellvorrichtung, die eine erste oder Wärmerückgewinnungseinstellung aufweist, in der die Zirkulation durch die dritte Fluidverbindung blockiert wurde, und eine zweite Einstellung, in der die Zirkulation von dem zweiten Einlass zu der zweiten Fluidverbindung blockiert wurde;

- wobei bei der zweiten Ablufteinstellung die Abluft über die Umleiteinrichtung umgeleitet wird.

8. Lüftungssystem (1) nach einem der vorhergehenden Ansprüche, wobei im Wärmetauscher (2) in der zweiten Einstellung der erste Einlass für ankommende Lüftungsluft mit einem Ende der ersten Fluidverbindung verbunden ist, wobei insbesondere die zweite Einstellung der Einstellvorrichtung die erste setzt Einlass in Fluidverbindung mit dem Ende der zweiten Fluidverbindung und der erste Einlass mit dem anderen Ende der zweiten Fluidverbindung, so dass einströmende Lüftungsluft in Wärmeaustauschkontakt mit den Elementen treten kann.

9. Lüftungssystem (1) nach einem der vorhergehenden Ansprüche, wobei der Wärmetauscher (2) ferner umfasst:

- eine erste Luftverdrängungseinrichtung zum Einstellen der einströmenden Luft in Bewegung;
- eine zweite Luftverdrängungsvorrichtung, um die ausströmende Luft in Bewegung zu versetzen.

10. Verfahren zum Belüften eines Gebäudes oder eines Raumes in einem Gebäude mittels der Belüftungsanordnung (1) nach einem der vorhergehenden Ansprüche, wobei in einer ersten ein - und ausströmenden Lüftungsluft in Wärmeaustauschkontakt miteinander gebracht werden, wobei sie sind im Wesentlichen durch PCM-Material getrennt, und in einer zweiten Einstellung wird einströmende Lüftungsluft in Wärmeaustauschkontakt mit dem PCM-Material gebracht, und ausströmende Lüftungsluft umgeht das PCM-Material, wobei es keine Wärme mit dem PCM-Material austauscht und keine Wärme mit ihm austauscht die ankommende Lüftungsluft.

11. Verfahren nach dem vorhergehenden Anspruch, wobei das PCM-Material in Elementen bereitgestellt wurde, die mit PCM-Material gefüllt sind, wobei die eintretende Lüftungsluft im Wesentlichen in Kontakt mit einer Seite der Elemente gebracht wird und die austretende Lüftungsluft in Kontakt mit der anderen Seite von gebracht wird die Elemente, wobei die Dicke der Elemente so gewählt wurde, dass der Luft-PCM-Wärmetauscher (2) nach einer Weile wie ein Gegenstromwärmetauscher mit im Wesentlichen konstanter Wärmeübertragung wirkt.

12. Verfahren nach einem der vorhergehenden Ansprüche 10-11, wobei in der ersten Einstellung, wenn eine gemessene Außenlufttemperatur niedriger als eine eingestellte Heizschwellentemperatur ist, eine Strömungsrate von ankommender und abfließender Belüftungsluft auf eine eingestellte Mindestbelüftung abgesenkt wird insbesondere bei der ersten Einstellung, wenn eine gemessene Außenlufttemperatur eine eingestellte Heizschwellentemperatur überschreitet und eine gemessene Luftversorgungstemperatur niedriger als eine thermisch eingestellte komfortable Luftzufuhrtemperatur ist und eine gemessene Raumlufttemperatur eine eingestellte Temperatur überschreitet, Luft Strömungsraten von ankommender Lüftungsluft und ausströmender Lüftungsluft werden erhöht.

13. Verfahren nach einem der vorhergehenden Ansprüche 10-11, wobei in der zweiten Einstellung, wenn die Außenlufttemperatur eine eingestellte Heizschwellentemperatur überschreitet und eine Lufttemperatur des Gebäudes oder die in den Raum einströmende Lüftungsluft eine thermisch komfortable Luftzufuhr überschreitet Übersteigt die Temperatur und die Raumlufttemperatur die eingestellte Temperatur und übersteigt die Innenraumlufttemperatur eine Außenlufttemperatur, wird im Wesentlichen die gesamte einströmende Luft in Wärmeaustauschkontakt mit den mit PCM-Material gefüllten Elementen gebracht, wobei insbesondere die einströmende Luft im Wesentlichen umströmt wird mit PCM gefüllte Elemente, wobei insbesondere die zweite Einstellung, wenn die Außenlufttemperatur eine eingestellte Heizschwellentemperatur überschreitet und eine Lufttemperatur des Gebäudes oder der in den Raum einströmenden Lüftungsluft eine thermisch komfortable Luftzufuhrtemperatur überschreitet und die Innenraumlufttemperatur überschreitet die Solltemperatur und die Raumlufttemperatur ist niedriger als oder gleich der Außenlufttemperatur ist, wird die ausströmende Lüftungsluft teilweise entlang und in Wärmeaustauschkontakt mit den mit PCM-Material gefüllten Elementen geleitet und teilweise um die mit PCM gefüllten Elemente herumgeleitet, ohne Wärme mit ihnen auszutauschen.

**14.** Computerprogrammprodukt für einer Steuervorrichtung (5) für eine Lüftungssystem (1) das wenn es auf dem Computerprozessor der Steuervorrichtung (5) der Lüftungssystem (1) nach einem der vorhergehenden Ansprüche 1-9 läuft, das Verfahren nach einem der vorhergehenden Ansprüche 10-13 auszuführen.

**Revendications**

**1.** Ensemble de ventilation (1) pour un bâtiment, comprenant:

- un échangeur de chaleur (2) pour amener l'air de ventilation entrant et l'air de ventilation sortant en contact d'échange thermique l'un avec l'autre, et muni d'un matériau PCM (30);
- un dispositif de déplacement d'air (3, 4) pour mettre l'air de ventilation en mouvement;
- un dispositif de commande (5) comprenant un processeur d'ordinateur, etant fonctionnellement couplé à l'échangeur de chaleur (2) et au dispositif de déplacement d'air (3, 4), pourvu d'un débit minimum de ventilation et configuré pour mettre l'ensemble de ventilation (1) dans:
- un premier réglage dans lequel l'air de ventilation entrant a un premier débit d'air entrant, l'air de ventilation sortant a un premier débit d'évacuation d'air, l'air de ventilation entrant et sortant sont amenés en chaleur échangeant contact mutuel dans l'échangeur de chaleur (2) au moins partialement avec le matériau PCM (30), et
- un deuxième réglage dans lequel l'air de ventilation entrant a un second débit d'alimentation en air et dans l'échangeur de chaleur (2) est sensiblement en contact d'échange de chaleur avec le matériau PCM (30), dans lequel la ventilation entrante et sortante l'air ne se trouve pas en contact d'échange de chaleur dans l'échangeur de chaleur (2), et dans lequel le second débit d'alimentation en air dépasse l'exigence minimale de débit de ventilation pour créer un refroidissement supplémentaire.

**2.** Ensemble de ventilation selon la revendication 1, dans lequel le second débit d'alimentation en air est au moins deux fois plus grand que le premier débit d'alimentation en air.

**3.** Ensemble de ventilation (1) selon la revendication 1 ou 2, dans lequel, dans le premier et / ou le deuxième réglage, le dispositif de déplacement d'air a été réglé pour une ventilation équilibrée.

**4.** Ensemble de ventilation (1) selon l'une quelconque des revendications précédentes, dans lequel le dispositif de déplacement d'air comprend un dispositif de déplacement d'air entrant pour déplacer l'air de ventilation entrant et un dispositif de déplacement d'air sortant pour déplacer l'air de ventilation sortant.

**5.** Ensemble de ventilation (1) selon l'une quelconque des revendications précédentes, dans lequel l'air de ventilation entrant et sortant est séparé dans l'échangeur de chaleur (2) au moyen de matériau PCM (30), en particulier d'éléments PCM, notamment des éléments PCM comprend un récipient en matière synthétique, lequel récipient est muni d'un matériau PCM.

**6.** Ensemble de ventilation (1) selon l'une quelconque des revendications précédentes, comportant en outre un capteur de température pour l'air de ventilation sortant et un capteur de température pour l'air de ventilation entrant, fonctionnellement couplé au dispositif de commande (5), en réponse à différence de température le dispositif de commande (5) règle l'ensemble de ventilation (1) dans le premier ou dans le second réglage, notamment lorsque la température de l'air de ventilation entrant a une température supérieure à une température de consigne, et l'air de ventilation sortant une température dépassant la température de consigne.

**7.** Ensemble de ventilation (1) selon l'une quelconque des revendications précédentes, dans lequel l'échangeur de chaleur (2) comprend:

- une série d'éléments munis de matériau PCM;
- au moins trois connexions fluidiques, dont une première connexion fluidique est en contact d'échange thermique avec un côté des éléments, une seconde liaison fluidique est en contact d'échange thermique avec un autre côté des éléments tel que l'échange thermique entre le premier et le second fluide la connexion s'effectue via le matériau PCM dans les éléments, et une troisième connexion de fluide qui n'est pas en chaleur échangeant le contact avec les éléments;

- au moins une première entrée pour l'air de ventilation entrant, qui se raccorde à une extrémité de la première connexion de fluide;

- au moins une première sortie pour l'air de ventilation entrant, qui se raccorde à une autre extrémité de la première connexion de fluide;

- au moins une deuxième entrée pour l'air de ventilation sortant, qui se raccorde à une extrémité de la deuxième connexion de fluide et à une extrémité de la troisième connexion de fluide;

- au moins une deuxième sortie pour l'air de ventilation sortant, qui se raccorde à une autre extrémité de la deuxième connexion de fluide et à une autre extrémité de la troisième connexion de fluide;

- un premier dispositif de réglage comprenant un premier réglage de récupération de chaleur dans lequel la circulation à travers la troisième connexion de fluide a été bloquée, et un second réglage dans lequel la circulation de la seconde entrée à la deuxième connexion de fluide a été bloquée;

- dans lequel dans le deuxième réglage, l'air de ventilation sortant est dévié par l'intermédiaire du dispositif de déviation.

8. Ensemble de ventilation (1) selon l'une quelconque des revendications précédentes, dans lequel l'échangeur de chaleur (2), dans le second réglage, la première entrée pour l'air de ventilation entrant est connectée à une extrémité de la première connexion de fluide, le second réglage du dispositif de réglage l'entrée dans la connexion fluidique avec l'extrémité de la deuxième connexion de fluide et la première entrée avec l'autre extrémité de la deuxième connexion de fluide, de sorte que l'air de ventilation entrant peut entrer en contact d'échange de chaleur avec les éléments.

9. Ensemble de ventilation (1) selon l'une quelconque des revendications précédentes, dans lequel l'échangeur de chaleur (2) comprend en outre:

- un premier dispositif de déplacement d'air pour mettre en mouvement l'air de ventilation entrant;
- un deuxième dispositif de déplacement d'air pour mettre en mouvement l'air de ventilation sortant.

10. Procédé pour ventiler un bâtiment ou une pièce dans un bâtiment au moyen de l'ensemble de ventilation (1) selon l'une quelconque des revendications précédentes, dans lequel, dans un premier réglage, l'air de ventilation entrant et sortant sont amenés en contact d'échange de chaleur, ils sont séparés par un matériau PCM, et dans un second réglage, l'air de ventilation entrant est amené en contact d'échange de chaleur avec le matériau PCM et l'air de ventilation sortant contourne le matériau PCM dans lequel il n'échange pas de chaleur avec le matériau PCM et n'échange pas de chaleur avec l'air de ventilation entrant.

11. Procédé selon la revendication précédente, dans lequel le matériau PCM a été fourni dans des éléments remplis de matériau PCM dans lequel l'air de ventilation entrant est amené sensiblement en contact avec un côté des éléments et l'air de ventilation sortant est amené en contact avec l'autre côté de les éléments, dans lesquels l'épaisseur des éléments a été choisie de sorte que l'échangeur de chaleur à air-PCM (2) agisse après un certain temps comme un échangeur de chaleur à contre-courant ayant un transfert de chaleur sensiblement constant.

12. Procédé selon l'une quelconque des revendications précédentes 10-11, dans lequel, dans le premier réglage, lorsqu'une température d'air extérieure mesurée est inférieure à une température seuil de chauffage réglée, un débit d'air de ventilation entrant et sortant est abaissé à une ventilation minimum réglée où, dans le premier réglage, lorsqu'une température d'air extérieure mesurée dépasse un seuil de chauffage réglé et qu'une température d'alimentation en air mesurée est inférieure à une température d'alimentation en air thermiquement réglée et une température d'air intérieur mesurée dépasse une température les débits d'air de ventilation entrant et d'air de ventilation sortant sont augmentés.

13. Procédé selon l'une quelconque des revendications précédentes 10-11, dans lequel la température de l'air extérieur dépasse un seuil de chauffage réglé et une température de l'air du bâtiment ou de l'air de ventilation s'écoulant dans la pièce dépasse une alimentation en air thermiquement confortable la température et la température de l'air intérieur dépassent la température fixée et la température de l'air intérieur dépasse la température de l'air extérieur, la quasi-totalité de l'air entrant est amenée en contact échangeur de chaleur avec les éléments remplis de matériau PCM. les éléments remplis de PCM, où le second réglage si la température de l'air extérieur dépasse une température de seuil de chauffage réglée et la température de l'air du bâtiment ou de l'air de ventilation circule dans la pièce la température de consigne et la température de l'air intérieur sont inférieure ou égale à la température de l'air extérieur, l'air de ventilation sortant est partiellement passé et en contact d'échange de chaleur avec les éléments remplis de matériau PCM et passe partiellement autour des éléments remplis de PCM sans échanger de chaleur avec eux.

14. Programme informatique pour un dispositif de commande (5) pour un ensemble de ventilation (1) qui, si exécuté sur le processeur d'ordinateur du dispositif de commande (5) de l'ensemble de ventilation (1) selon l'une quelconque des revendications précédentes 1-9, fait le procédé selon l'une quelconque des revendications précédentes 10-13.

# Fig. 1

# Fig. 2a

# Fig. 2b

# Fig. 3a

$V_e \left[ \frac{m^3}{h} \right]$

$\theta_e \ [°C]$

30

$\theta_t \ [°C]$

$\theta_p \ [°C]$   $H_p \left[ \frac{W}{k} \right]$

$V_i \ \left[ \frac{m^3}{h} \right]$

$\theta_i \ [°C]$

# Fig. 3b

$\theta_e \ [°C]$

$d\theta_e$

$\theta_t$

$\theta_p$   $\theta_p$

0

$dH_p$

$H_p \left[ \frac{W}{k} \right]$

# Fig. 3c

Pe

$\theta_e$   He   $\theta_t$

Cp

# Fig. 4a

# Fig. 4b

## Fig. 5a

## Fig. 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003102484 A
- WO 2009101398 A
- NL 2012050544 W
- WO 2013191554 A